# EUROPEAN PATENT APPLICATION

(11) **EP 1 600 352 A1**
(43) Date of publication of application: **30.11.2005**
(21) Application number: 05011334.9
(22) Date of filing: 25.05.2005
(51) Int. Cl.: B62B 3/12

(54) **An electric golf cart**

(30) Priority: 27.05.2004 CN
(71) Applicant: Mocad Limited, Cork (IE)
(72) Inventor: Liao, Hseuh-Jean, Baoan District Shenzhen 518109 (CN)
(74) Representative: Boyce, Conor

(57) **Abstract**

An electric golf cart comprises a carriage 920 having-ground-engaging wheels 810 and a battery-operated electric motor mounted on the carriage for driving the wheels. An upper rod 430 has its lower end pivotally connected to the carriage and a lower rod 410 has its upper end pivotally connected to the carriage. A handle assembly 440 is connected to the upper end of the upper rod a front wheel assembly 100 is connected to the lower end of the lower rod. Upper and lower golf-bag support brackets 220, 210 are mounted respectively on the upper and lower rods. The cart is foldable between an operational state in which the upper rod 430 extends upwardly and rearwardly away from the carriage 920 with the handle assembly 440 at its upper end remote from the carriage and the lower rod 410 extends downwardly and forwardly from the carriage with the front wheel 100 in contact with the ground, and a folded state (Figure 6) in which the upper rod 430 is folded down behind the carriage 920 and the lower rod 410 is folded inwardly towards the front of the carriage.

## Description

This invention relates to an electric golf cart for transporting a golf bag.

According to the present invention there is provided an electric golf cart comprising a carriage having ground-engaging wheels and a battery-operated electric motor mounted on the carriage for driving the wheels, an upper elongated frame member having its lower end pivotally connected to the carriage, a lower elongated frame member having its upper end pivotally connected to the carriage, a handle assembly connected to the upper end of the upper frame member, a front wheel assembly connected to the lower end of the lower frame member, and upper and lower golf-bag support brackets, wherein the cart is foldable between an operational state in which the upper frame member extends upwardly and rearwardly away from the carriage and the lower frame member extends downwardly and forwardly from the carriage with the front wheel in contact with the ground, and a folded state in which the upper frame member is folded down behind the carriage and the lower frame member is folded inwardly towards the front of the carriage.

In the description and claims, terms of relative position or orientation, such as "upper", "lower", "forwardly inclined", "horizontal", etc., refer to the configuration of the cart in its operational state with all wheels engaging the ground.

An embodiment of the invention will now be described, by way of example, with reference to the accompanying drawings, in which:
Figure 1 is a perspective view of an electric golf cart according to the embodiment of the invention in its operative state.
Figure 2 is a perspective exploded view of the cart of Figure 1.
Figure 3 is a perspective exploded view of the pivot mechanism between the handle mechanism and upper frame member of the cart of Figures 1 and 2.
Figure 4 is a perspective exploded view of the pivot mechanism between each of the upper and lower frame members and the carriage of the cart of Figures 1 and 2.
Figure 5 is a perspective exploded view of the pivot mechanism between the front wheel assembly and lower frame member of the cart of Figures 1 and 2.
Figure 6 is a perspective view of the electric golf cart of Figures 1 and 2 in its folded state.

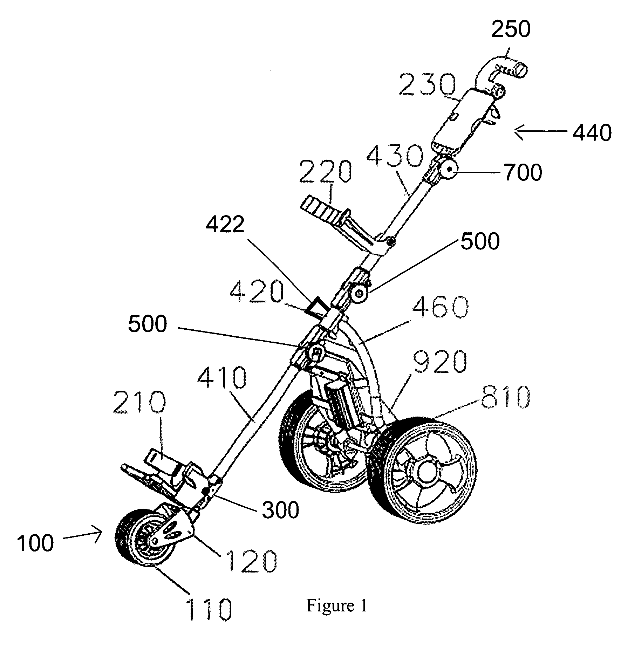

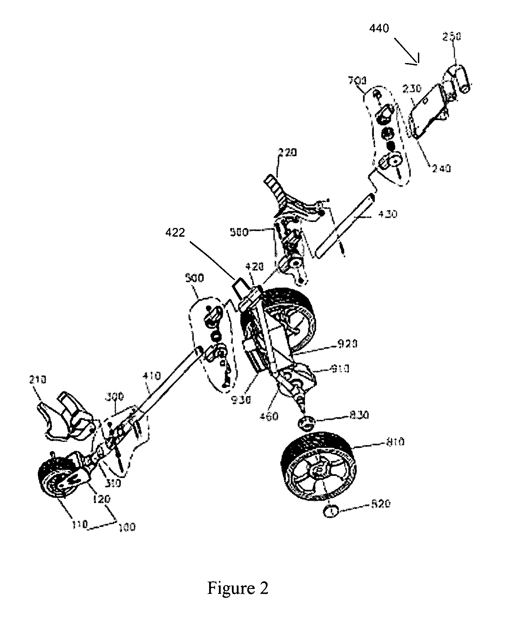

Figures 1 and 2 show an electric golf cart in an unfolded or operational state. It comprises a carriage 920 having a link member 420 at the top and a fork 460 extending rigidly downwardly from the link member 420. A pair of ground-engaging wheels 810 are mounted at opposite ends of a rotatable shaft passing transversely across the lower ends of the fork, the wheels 810 being held in place on the respective ends of the shaft by securing members 820, 830. An electric motor 910 is mounted between the lowers ends of the fork 460 to rotate the shaft and hence the wheels 810. The motor 910 is energised by a rechargeable battery 930 also mounted on the carriage 920.

An upper elongated frame member in the form of a first hollow cylindrical shaft 430 has its lower end pivotally connected by a pivot mechanism 500 to the upper end of the link member 420 at the top of the carriage 920. A lower elongated frame member in the form of a second hollow cylindrical shaft 410 has its upper end pivotally connected by a similar pivot mechanism 500 to the lower end of the link member 420. A handle assembly 440 is pivotally connected by a pivot mechanism 700 to the upper end of the shaft 430, and a front wheel assembly 100 is pivotally connected by a pivot mechanism 300 to the lower end of the shaft 410. The pivotal axis of each pivot mechanism 300, 500 and 700 is substantially horizontal.

The front wheel assembly 100 comprises a fork 120 containing a freely rotatable front wheel 110. The handle assembly 440 comprises a handlebar 250 attached to the upper end of a short shaft 240 to which is attached a scorecard holder 230 (in Figure 2 the bottom end of the shaft 240 can just be seen projecting below the bottom end of the holder 230).

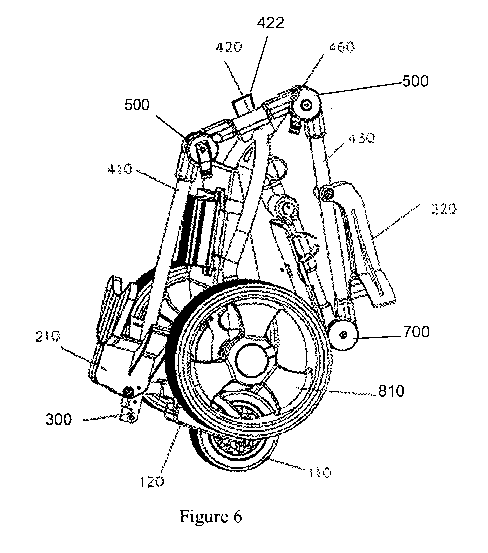

The cart is foldable between the operational state shown in Figures 1 and 2 and a folded state shown in Figure 6. In the operational state of the cart the upper shaft 430 extends upwardly and rearwardly away from the carriage 920 with the handle assembly 440 at its upper end remote from the carriage, and the lower shaft 410 extends downwardly and forwardly from the carriage with the front wheel in contact with the ground, the shafts 410 and 430 lying along a substantially common linear axis. In the operational state the motor 910 is controlled by an on-off switch (not shown) mounted on the handle assembly 440. In the folded state of the cart, Figure 6, the upper shaft 430 is folded down behind the carriage 920 and the lower 410 is folded inwardly towards and against the front of the carriage, each shaft being folded at its respective pivot mechanism 500 relative to the link member 420. Thus, each of the shafts 410, 430 folds inwardly towards the carriage 920 by rotation in a substantially common vertical plane normal to the axis of the wheels 810.

Furthermore, in the operational state of the cart the handle assembly 440 extends away from the upper shaft 430 but is folded up, at the pivot mechanism 700, to lie between the carriage 920 and the upper shaft 430 in the folded state of the cart. Also, the front wheel assembly 100 is folded, at the pivot mechanism 300, to lie under the carriage in the folded state of the cart. In the folded state the cart may be carried by a flexible carrying handle 422 attached to the link member 420.

Finally, the cart includes lower and upper golf bag support brackets 210, 220 mounted on the pivot mechanism 300 and upper shaft 430 respectively. These brackets are also folded against the respective shaft 410 or 430 in the folded state of the cart, as seen in Figure 6.

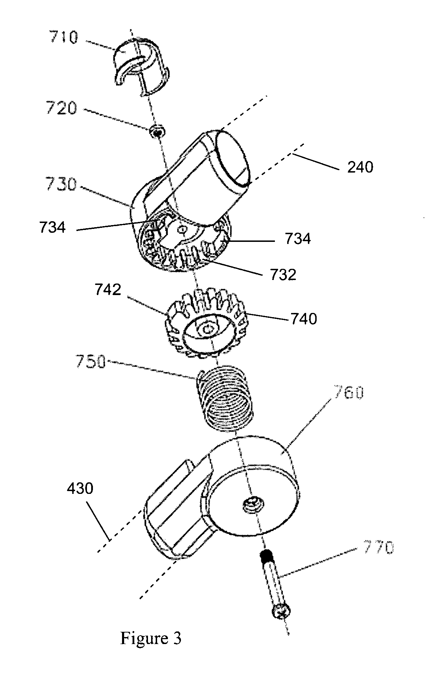

Referring now to Figure 3, the pivot mechanism 700 comprises left and right covers 730, 760 respectively connected to the ends of the shafts 240, 430 as shown in dashed lines. The covers 730, 760 have open sides which are secured in face-to-face abutment to form a closed housing by a nut 720 and bolt 770 passing axially through the covers. A plurality of teeth 732 are formed around the inside circumference of each cover.

The teeth inside the cover 730 have wider gaps 734 between them at approximately diametrically opposite points, while the teeth inside the cover 760 have only one such wide gap 734 (not visible in Figure 3). A gear 740 having teeth complementary to those around the inside of the cover 760 - i.e. it has only one wide tooth 742 corresponding to the width of each wide gap 734 - is enclosed within the housing and is biased by a compression spring 750 into engagement with the teeth 732 in both covers. Thus the gear 740 extends across the interface between the two covers with the wide tooth 742 engaging the single wide gap 734 inside the cover 760 and one of the two wide gaps 734 inside the cover 730. This locks the covers 730, 760 against relative rotational movement in one of two angular positions depending upon which of the two wide gaps 734 in the cover 730 is engaged by the wide tooth 742 on the gear 740.

To enable rotation of the cover 730 relative to the cover 760 about the axis of the bolt 770, a push button 710 entering the side of the cover 730 is depressed to force the gear 740, against the bias of the spring 750, to fully enter the cover 760 and thereby release the cover 730 for rotation. The cover 730 can now be rotated until the opposite wide gap 734 is aligned with the wide tooth 742, whereupon release of the button causes the spring 750 to push the gear 740 once more into engagement with the teeth 732 on the cover 730 to lock the covers against relative rotation. The angular positions of the two wide gaps 734 around the inside circumference of the cover 730 define the relative angular positions of the upper shaft 430 and handle assembly 440 in the operative and folded states of the cart respectively.

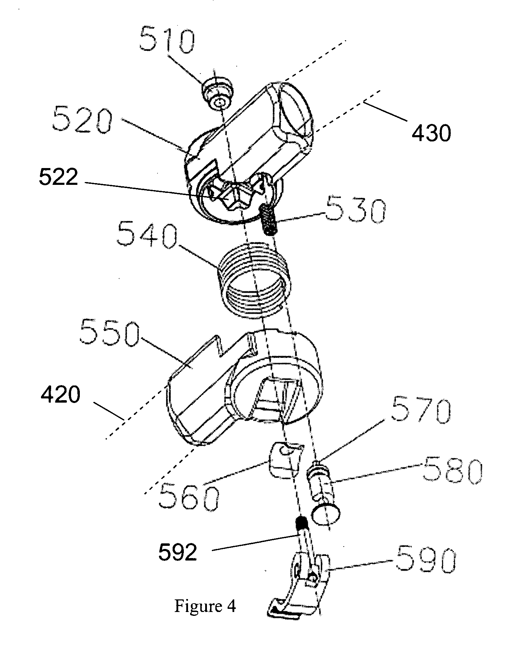

Referring now to Figure 4, the upper pivot mechanism 500 comprises left and right covers 520, 550 respectively connected to the end of the upper shaft 430 and link member 420 as shown in dashed lines. The covers 520, 550 have open sides which are secured in face-to-face abutment to form a closed housing by a nut 510 and bolt 592 passing axially through the covers. Rather than a conventional head, the bolt 592 has a quick-release lever 590 to be described below. A plurality of teeth 522 are formed centrally within the cover 520, and complementary teeth (not shown) are formed within the cover 550. The arrangement is such that when the covers 520, 550 are in face-to-face abutment the cover 550 can only assume one of a plurality of discrete angular positions relative to the cover 520. To change the angular position of the cover 550 the two covers have to be moved apart sufficiently for the teeth on the inside of the covers to disengage.

A compression spring 540 within the housing formed by the covers tends to bias the two covers 520, 550 apart, but they are normally held in close face-to-face abutment by the quick release lever 590 which, when rotated downwardly to the position shown in Figure 4, pulls on the nut 510 through a camming action on the exterior surface of the cover 550. However, when the lever is rotated upwardly the nut 510 is released sufficiently for the compression spring 540 to force the covers 520, 550 apart so that their internal teeth disengage. This allows the cover 520, and hence the shaft 430, to be rotated downwardly against the rear of the carriage 920 as shown in Figure 6. The quick release lever 590 is then rotated down again to re-engage the teeth inside the covers 520 and 550 so that the upper shaft 430 and link member 420 are locked ion their folded position.

The lower pivot mechanism 500, i.e. that between the link member 420 and lower shaft 410, is essentially the same as the upper pivot mechanism shown in Figure 4. However, the internal teeth in the cover members may be differently designed to provide different discrete angular settings for the link member 420 and lower shaft 410 according to the geometry of the folded cart.

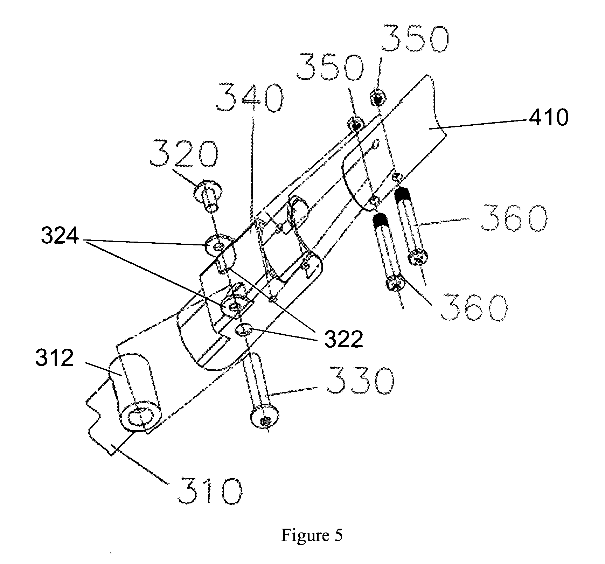

Referring now to Figure 5, the folding mechanism 300 comprises a bracket 340 which is secured to the lower end of the lower shaft 410 by a pair of nuts and bolts 360, 350. The fork 120 of the front wheel assembly 100 is connected to the lower end of a short shaft 310 whose upper end has a hollow cylinder 312. The latter is rotatably secured to the bracket 340 by a pair of screws 320, 330 passing through the centre of the cylinder 312 and aligned holes 322 in the bracket. The lower golf support bracket 210 is rotatably mounted on the lugs 324 of the bracket 340.

It will be understood that the pivot mechanisms 300, 500 and 700 are merely examples of a wide range of pivot mechanisms which can be used, and can be replaced by other suitable pivot mechanisms.

In summary, the dimensions of the cart body are greatly reduced and easy to carry when folded by using the multifolding mechanisms described. In addition, human physical strength is saved by using a motor drive when sporting equipment such as golf balls and golf clubs are transported.

The invention is not limited to the embodiment described herein which may be modified or varied without departing from the scope of the invention.

## Claims

1. An electric golf cart comprising a carriage having ground-engaging wheels and a battery-operated electric motor mounted on the carriage for driving the wheels, an upper elongated frame member having its lower end pivotally connected to the carriage, a lower elongated frame member having its upper end pivotally connected to the carriage, a handle assembly connected to the upper end of the upper frame member, a front wheel assembly connected to the lower end of the lower frame member, and upper and lower golf-bag support brackets, wherein the cart is foldable between an operational state in which the upper frame member extends upwardly and rearwardly away from the carriage and the lower frame member extends downwardly and forwardly from the carriage with the front wheel in contact with the ground, and a folded state in which the upper frame member is folded down behind the carriage and the lower frame member is folded inwardly towards the front of the carriage.

2. An electric golf cart as claimed in claim 1, wherein the handle assembly is pivotally connected to the upper end of the upper frame member, the handle assembly extending away from the upper frame member in the operational state of the cart and being folded up between the carriage and the upper frame member in the folded state of the cart.

3. An electric golf cart as claimed in claim 1 or 2, wherein the front wheel assembly is pivotally connected to the lower end of the lower frame member and is folded under the carriage in the folded state of the cart.
